# EUROPEAN PATENT APPLICATION

(11) **EP 4 404 358 A1**
(43) Date of publication of application: **24.07.2024**
(21) Application number: 22869717.3
(22) Date of filing: 04.08.2022
(51) Int. Cl.: H01M 50/308, H01M 50/317, H01M 50/325

(54) **PRESSURE REGULATING VALVE FOR POWER STORAGE MODULE, AND POWER STORAGE UNIT**

(30) Priority: 16.09.2021 JP 2021151486
(71) Applicant: NOK Corporation, Minato-ku Tokyo 105-8585 (JP)
(72) Inventor: SAKUMA, Katsuyoshi, Kitaibaraki-shi, Ibaraki 319-1535 (JP); NAGASAWA, Motohiro, Kitaibaraki-shi, Ibaraki 319-1535 (JP)
(74) Representative: TBK
(86) International application number: PCT/JP2022/029893
(87) International publication number: WO 2023/042569

(57) **Abstract**

A pressure-regulating valve for a power storage module capable of improving maintenance and a power storage unit including the pressure-regulating valve for a power storage module are provided. A pressure-regulating valve (1) for a power storage module is a pressure-regulating valve for a power storage module in which a case (2) accommodating a valve body in a valve chamber is attached to a power storage device (10), and the case (2) has a sealing surface (2A) that is provided with a sealing member (21) and is to contact the power storage device (10), and an attaching portion (22) attachable to the power storage device (10) by moving along a predetermined slide direction (X direction) along the sealing surface (2A).

## Description

### Technical Field

The present invention relates to a pressure-regulating valve for a power storage module and a power storage unit.

### Background Art

Conventionally, as a power storage module for a battery to be mounted on a vehicle, there has been proposed a power storage module provided with a pressure-regulating valve (for example, see Patent Literature 1). In the power storage module described in Patent Literature 1, the pressure-regulating valve includes a base member, a case member in which a cylindrical portion is formed, a valve body that is an elastic member to be accommodated in the cylindrical portion, and a cover member that closes an opening of the case member. The base member is welded to a frame body of the power storage module, and the case member is welded to the base member, whereby the pressure-regulating valve is fixed.

### Document List

### Patent Literature

Patent Literature 1: International Publication No. WO 2019/064843

### Summary of Invention

### Technical Problem

However, in the power storage module described in Patent Literature 1, if deterioration, abnormality or the like occurs in the valve body or the like as a result of using the pressure-regulating valve, it has been impossible to remove the pressure-regulating valve because the case member is welded to the base member, and it has been impossible to perform replacement and inspection of the components. Thus, it has been desired to improve maintainability of the pressure-regulating valve.

The present invention is made in view of the aforementioned problem, and it is an object of the present invention to provide a pressure-regulating valve for a power storage module capable of improving maintenance, and a power storage unit including the pressure-regulating valve for a power storage module.

### Solution to Problem

In order to attain the above-described object, a pressure-regulating valve for a power storage module according to the present invention is a pressure-regulating valve for a power storage module in which a case accommodating a valve body in a valve chamber is to be attached to a power storage device, wherein the case has a sealing surface that is provided with a sealing member and is to contact the power storage device, and an attaching portion attachable to the power storage device by moving along a predetermined slide direction along the sealing surface.

In the pressure-regulating valve for a power storage module according to one aspect of the present invention, the case has a pair of edge portions along the slide direction, and the attaching portion is a locked portion that is locked by the power storage device by protruding to outside from each of the edge portions.

A power storage unit according to the present invention is a power storage unit including the above-described pressure-regulating valve for a power storage module, and a power storage device, wherein the power storage device has a holding portion to hold the attaching portion.

In the power storage unit according to one aspect of the present invention, the holding portion has a plurality of pairs of clamping portions to clamp the case from a direction along the sealing surface and orthogonal to the slide direction.

### Effects of Invention

According to the pressure-regulating valve for a power storage module according to the present invention, it is possible to improve maintainability.

### Brief Description of Drawings

[Fig. 1] Fig. 1 is a perspective view of a power storage unit including a pressure-regulating valve for a power storage module according to an embodiment of the present invention.
[Fig. 2] Fig. 2 is a perspective view of the pressure-regulating valve for a power storage module according to the embodiment of the present invention.
[Fig. 3] Fig. 3 is a perspective view of the pressure-regulating valve for a power storage module according to the embodiment of the present invention.
[Fig. 4] Fig. 4 is a perspective view of the pressure-regulating valve for a power storage module according to the embodiment of the present invention.
[Fig. 5] Fig. 5 is a perspective view of the pressure-regulating valve for a power storage module according to the embodiment of the present invention.
[Fig. 6] Fig. 6 is a plan view of the pressure-regulating valve for a power storage module according to the embodiment of the present invention.
[Fig. 7] Fig. 7 is a side view of the pressure-regulating valve for a power storage module according to the embodiment of the present invention.
[Fig. 8] Fig. 8 is a bottom view of the pressure-regulating valve for a power storage module according to the embodiment of the present invention.
[Fig. 9] Fig. 9 is a sectional view showing an essential part of the pressure-regulating valve for a power storage module according to the embodiment of the present invention.

### Description of Embodiment

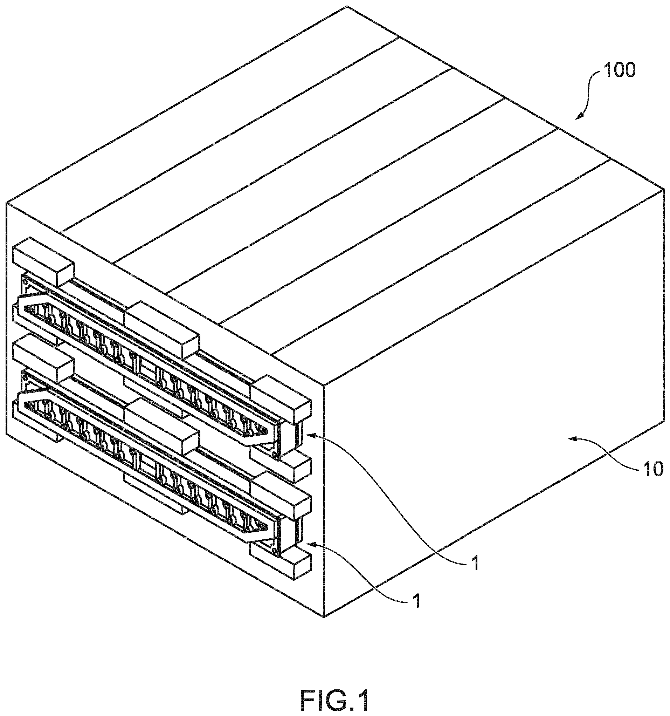

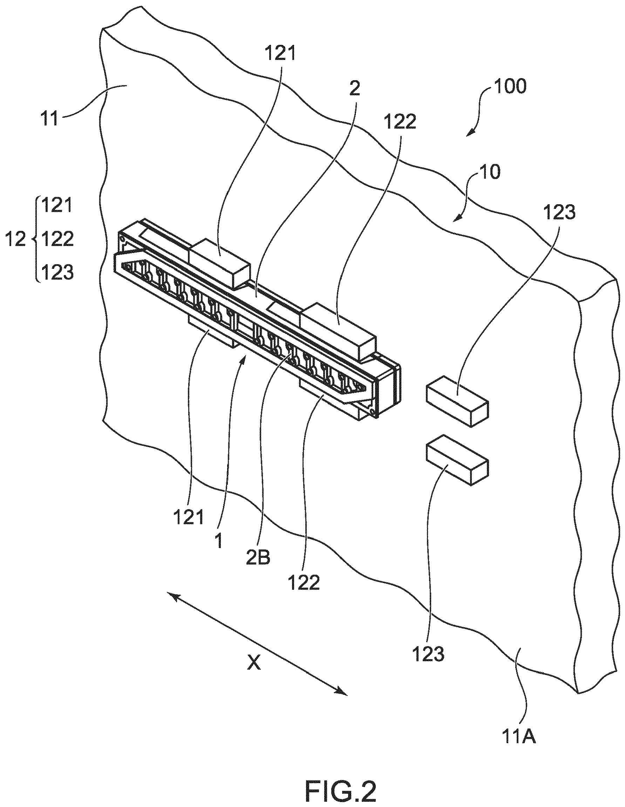

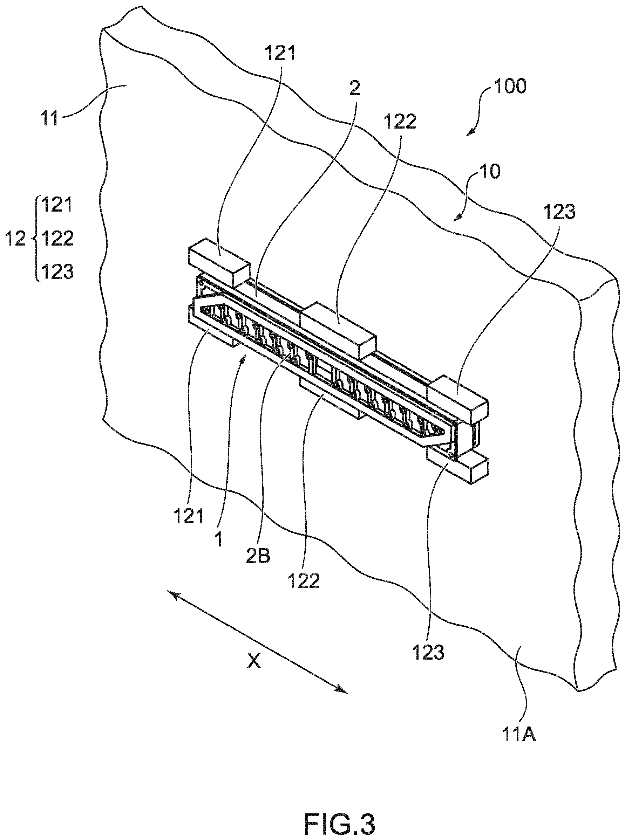

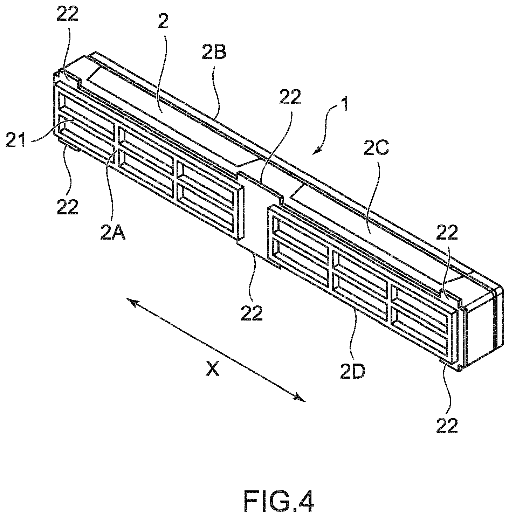

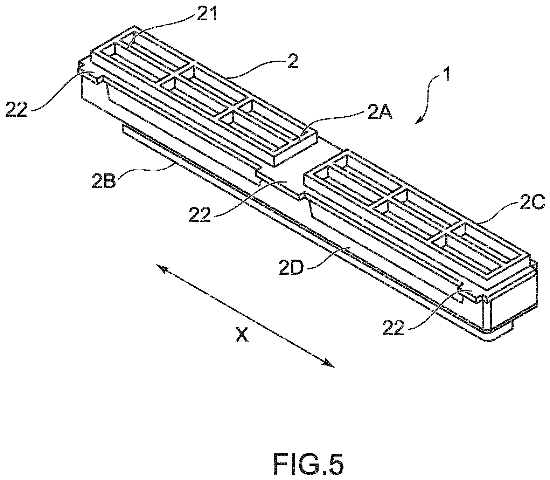

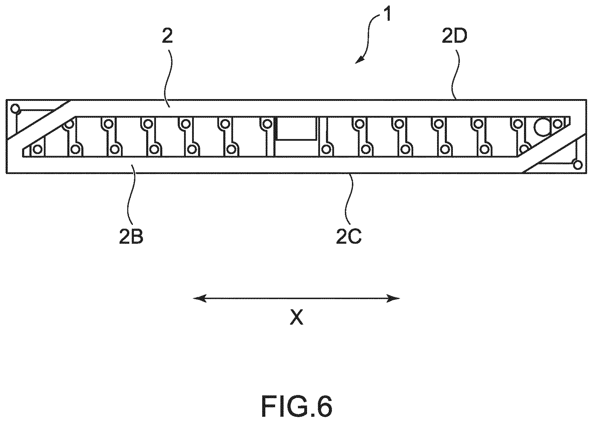

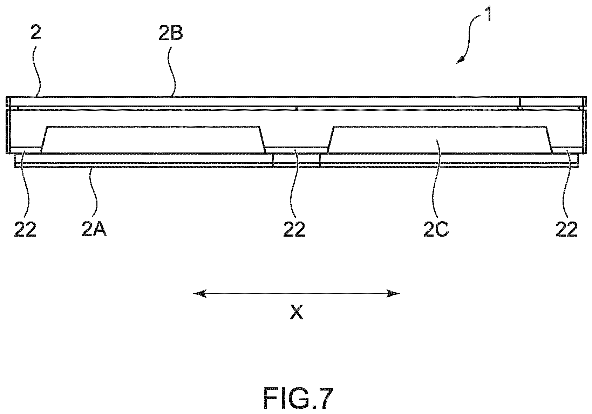

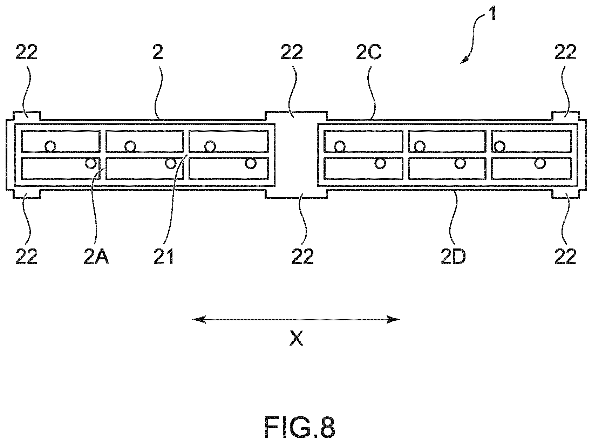

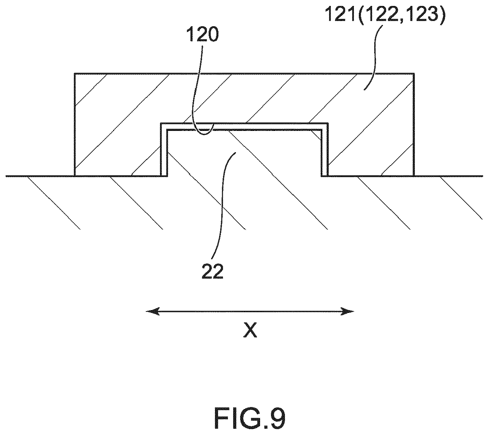

Hereinafter, an embodiment of the present invention will be described with reference to the drawings. Fig. 1 is a perspective view of a power storage unit 100 including a pressure-regulating valve 1 for a power storage module according to the embodiment of the present invention, Fig. 2 is a perspective view of the pressure-regulating valve 1 for a power storage module, Fig. 3 is a perspective view of the pressure-regulating valve 1 for a power storage module, Fig. 4 is a perspective view of the pressure-regulating valve 1 for a power storage module, Fig. 5 is a perspective view of the pressure-regulating valve 1 for a power storage module, Fig. 6 is a plan view of the pressure-regulating valve 1 for a power storage module, Fig. 7 is a side view of the pressure-regulating valve 1 for a power storage module, Fig. 8 is a bottom view of the pressure-regulating valve 1 for a power storage module, and Fig. 9 is a sectional view showing an essential part of the pressure-regulating valve 1 for a power storage module.

As shown in Figs. 1 to 8, the pressure-regulating valve 1 for a power storage module according to the embodiment of the present invention is a pressure-regulating valve for a power storage module in which a case 2 accommodating a valve body in a valve chamber is to be attached to a power storage device 10, and the case 2 has a sealing surface 2A that is provided with a sealing member 21 and is to contact the power storage device 10, and an attaching portion 22 capable of being attached to the power storage device 10 by moving along a predetermined slide direction (X direction) along the sealing surface 2A. The power storage unit 100 includes the pressure-regulating valve 1 for a power storage module and the power storage device (power storage module) 10. Hereinafter, the pressure-regulating valve 1 for a power storage module and the power storage unit 100 will be specifically described.

The pressure-regulating valve 1 for a power storage module is configured to release pressure when internal pressure rises in the power storage device 10. The power storage device 10 is, for example, a nickel hydrogen battery, and is provided to supply electric power to a motor in a vehicle such as an electric car, and a hybrid car.

The case 2 is entirely formed of, for example, a synthetic resin into a rectangular parallelepiped shape, and has the sealing surface 2A facing a power storage device 10 side, and an open surface 2B facing an opposite side thereto. In the case 2, a plurality of recessed parts are formed seen from the open surface 2B, and the recessed part forms the valve chamber, where the valve body which is an elastic member is accommodated. A through-hole is formed in a bottom portion of each of the recessed parts, and gas can be introduced into the recessed part from a sealing surface 2A side.

A cover member is provided on an open surface 2B side of the case 2, and the recessed parts are closed. In this case, the cover member is preferably attachable and detachable with respect to the case 2. Further, the cover member may be provided with a pressing portion that presses the valve body to a valve closing side.

The sealing surface 2A of the case 2 is formed into a frame shape as shown in Figs 4 and 5. A region in each of frames corresponds to an opening portion on the power storage device 10 side, and an appropriate number of recessed parts are formed in the region in each of the frames. On the sealing surface 2A, a sealing member 21 which is an elastic member is provided along the frame. The sealing member 21 can be an elastic member such as a rubber and a resin, for example, and can be provided at the case 2 by integral molding, for example.

Here, an extending direction (direction of a longest side) of the case 2 in the rectangular parallelepiped shape is defined as an X direction. As described later, the X direction is the slide direction. The case 2 has a pair of side surfaces 2C and 2D that are sandwiched by the sealing surface 2A and the open surface 2B and along the X direction. In other words, the side surfaces 2C and 2D are a pair of edge portions along the slide direction. Three attaching portions 22 are formed at each of portions on a sealing surface 2A side, of the side surfaces 2C and 2D.

The attaching portions 22 are formed into a plate shape protruding to outside from the side surfaces 2C and 2D. Here, "protruding to outside" means that the attaching portion 22 formed at the side surface 2C and the attaching portion 22 formed at the side surface 2D extend to be away from each other. The attaching portions 22 disposed in a center portion in the X direction have a dimension in the X direction larger than other attaching portions 22. Thereby, the attaching portions 22 in the center portion are engageable with only clamping portions 122 in a center of clamping portions 121 to 123 described later. Note that dimensions of all the attaching portions may differ from one another, or dimensions of each of the attaching portions in the center may be smaller than those of the other attaching portions.

The power storage device 10 includes a casing 11 to accommodate a module having a power storing function. In the casing 11, opening portions for releasing gas when internal pressure rises are formed, and the pressure-regulating valve 1 for a power storage module is provided to correspond to the opening portions. In other words, when the internal pressure of the power storage device 10 rises, gas is released from the opening portions of the casing 11, and the gas passes through the through-holes of the case 2 and is introduced into the recessed part. When pressure in the recessed part reaches a value equal to or larger than a preset value, the valve body opens the through-hole, and gas is released to an external space.

The casing 11 of the power storage device 10 is provided with a holding portion 12 for attaching the case 2 of the pressure-regulating valve 1 for a power storage module by holding the attaching portions 22. The holding portion 12 is formed to protrude from an attaching surface 11A in which the opening portions are formed, of the casing 11. The holding portion 12 is configured by three pairs of clamping portions 121 to 123 correspondingly to the attaching portions 22 of the case 2. Note that the numbers of the attaching portions 22 and the clamping portions 121 to 123 are not limited to the numbers described above. The attaching surface 11A is a surface which the sealing surface 2A of the case 2 contacts. Each of the clamping portions 121 to 123 is positioned along the attaching surface 11A (along the sealing surface 2A) to clamp the case 2 from a direction orthogonal to the X direction.

Here, details of an attaching method and an attaching structure of the case 2 to the casing 11 are described. First, as shown in Fig. 2, the sealing surface 2A of the case 2 is brought into contact with the attaching surface 11A of the casing 11, and the case 2 is brought into a state of being clamped by the clamping portions 121 and 122. From this state, the case 2 is slid and moved along the X direction with respect to the casing 11 as shown in Fig. 3. Thereby, the respective attaching portions 22 move to positions corresponding to the clamping portions 121 to 123 and are locked. It is preferable that at a time of such locking, the sealing member 21 is compressed and thereby closely contacts the attaching surface 11A.

As shown in Fig. 9, the clamping portions 121 to 123 each have a recessed part 120. The attaching portion 22 is locked to the recessed part 120 by getting over wall parts adjacent in the X direction, and fitting in the recessed part 120 by the slide movement as described above. In this way, the attaching portion 22 functions as a locked portion. Note that a locking structure of the holding portion 12 and the attaching portion 22 is not limited to the above-described structure but may be any structure if the attaching portions 22 are locked by slide movement in the X direction. Further, a tapered portion or the like may be formed on the attaching portion so that the attaching portion may easily get over the wall parts at the time of locking.

In the state in which the attaching portion 22 is locked by the holding portion 12 as described above, the opening portions of the casing 11 correspond to the region in the frame of the sealing surface 2A, gas can be introduced into the recessed parts from the casing 11, and the pressure-regulating valve 1 for a power storage module can function.

As a result of the pressure-regulating valve 1 for a power storage module repeating opening and closing by using the power storage unit 100, and the valve body deteriorating over time, desired valve opening characteristics may not be obtained. In such a case, from the state in which the attaching portions 22 are locked by the holding portion 12 as in Fig. 3, the case 2 is slid and moved along the X direction with respect to the casing 11 and brought into a state in which locking is released as in Fig. 2. Thereby, it is possible to remove the pressure-regulating valve 1 for a power storage module from the power storage device 10, and appropriate maintenance work such as replacement and inspection of components becomes possible. Further, it is also possible to replace the entire pressure-regulating valve 1 for a power storage module.

When the case 2 is slid and moved along the X direction at a time of attaching and detaching as described above, a configuration in which a moving direction at the time of attaching and a moving direction at a time of releasing attachment are determined (being locked by moving to one side of the X direction, and locking is released by moving to another side) may be adopted, or both attaching and detaching may be possible when the case is moved in either direction.

In this way, according to the pressure-regulating valve 1 for a power storage module according to the embodiment of the present invention, as a result of the case 2 having the attaching portions 22, the pressure-regulating valve 1 for a power storage module and the power storage device 10 become attachable and detachable by being relatively moved along the slide direction, and it is possible to improve maintainability.

Further, since the attaching portions 22 protrude from the side surfaces 2C and 2D of the case 2, it is possible to easily lock the attaching portions 22 by the power storage device 10.

Further, since the holding portion 12 is configured by the plurality of pairs of clamping portions 121 to 123 that clamp the case 2, it is possible to guide the case 2 along the X direction, and improve workability of attachment and detachment. Furthermore, it is possible to slide and move the case 2 after the case 2 is positioned so that the attaching portions 22 are each located between the two pairs of clamping portions that are lined up in the X direction, and it is possible to decrease a slide amount at the time of attaching and detaching, and improve workability, as compared with the case in which the holding portion is configured by only one pair of clamping portions.

Note that the present invention is not limited to the above-described embodiment but includes other configurations and the like that can achieve the object of the present invention, and modifications and the like as shown below are also included in the present invention. For example, in the embodiment of the present invention described above, the attaching portions 22 protrude from the side surfaces 2C and 2D of the case 2, but the attaching portions may be formed into a protrusion shape protruding from the sealing surface, and recessed parts and through-holes that receive the protrusions may be formed on the attaching surface of the power storage device.

Further, in the embodiment of the present invention described above, the holding portion 12 is configured by the plurality of clamping portions 121 to 123 that clamp the case 2, but the holding portion may be configured by only one pair of clamping portions.

Although the embodiment of the present invention is described thus far, the present invention is not limited to the pressure-regulating valve for a power storage module according to the embodiment of the present invention described above, but includes all aspects included in the idea and the claims of the present invention. Further, in order to exhibit at least a part of the problem and the effects described above, the respective configurations may be selectively combined as appropriate. For example, the shapes, materials, placements, sizes and the like of the respective components in the above-described embodiment can be changed as appropriate according to a specific use aspect of the present invention.

List of Reference Signs

1 pressure-regulating valve for power storage module
2 case
21 sealing member
22 attaching portion
2A sealing surface
2B open surface
2C, 2D side surface (edge portion)
10 power storage device (power storage module)
11 casing
11A attaching surface
12 holding portion
121 to 123 clamping portion
120 recessed part
100 power storage unit

## Claims

1. A pressure-regulating valve for a power storage module in which a case accommodating a valve body in a valve chamber is to be attached to a power storage device, wherein
the case has a sealing surface that is provided with a sealing member and is to contact the power storage device, and an attaching portion attachable to the power storage device by moving along a predetermined slide direction along the sealing surface.

2. The pressure-regulating valve for a power storage module according to claim 1, wherein
the case has a pair of edge portions along the slide direction, and
the attaching portion is a locked portion that is locked by the power storage device by protruding to outside from each of the edge portions.

3. A power storage unit comprising a pressure-regulating valve for a power storage module according to claim 1 or 2, and a power storage device,
wherein the power storage device has a holding portion to hold the attaching portion.

4. The power storage unit according to claim 3, wherein the holding portion has a plurality of pairs of clamping portions to clamp the case from a direction along the sealing surface and orthogonal to the slide direction.
